# EUROPEAN PATENT APPLICATION

(11) **EP 1 662 303 A1**
(43) Date of publication of application: **31.05.2006**
(21) Application number: 05025559.5
(22) Date of filing: 23.11.2005
(51) Int. Cl.: G02F 1/13363

(54) **Liquid crystal display device**

(30) Priority: 24.11.2004 JP 2004339675
(71) Applicant: Uchida, Tatsuo, Miyagino-ku Sendai-shi Miyagi (JP); Ishinabe, Takahiro, Aoba-ku Sendai-shi Miyagi (JP); ALPS ELECTRIC CO., LTD., Ota-ku Tokyo (JP)
(72) Inventor: Uchida, Tatsuo, Sendai-shi Miyagi-ken (JP); Ishinabe, Takahiro, Sendai-shi, Miyagi-ken (JP); Kano, Mitsuru, Ota-ku Tokyo (JP); Oizumi, Mitsuo, Ota-ku Tokyo (JP)
(74) Representative: Klunker . Schmitt-Nilson . Hirsch

(57) **Abstract**

A liquid crystal display device (1) includes: a liquid crystal panel (2) including a pair of substrates (2a,2b) being disposed so as to oppose each other and having electrodes and alignment films formed respectively on the opposing surfaces thereof, and a liquid crystal layer (2c) in which nematic liquid crystal encapsulated between the pair of substrates is aligned in the horizontal direction to be at substantially 0° in twist angle by giving a pretilt in a predetermined direction by the alignment film, a polarizing plate(s) (3a,3b) being arranged on the front side and back side of the liquid crystal panel (2) and being set in direction of polarization to provide a black level when a drive voltage to be applied between the electrodes is brought into an OFF state, and optical compensating means (5,6,8,9) disposed between the polarizing plate(s) (3a,3b) and the liquid crystal panel (2) for performing optical compensation for the liquid crystal layer (2c).

## Description

### BACKGROUND OF THE INVENTION

### 1. Field of the Invention

The present invention relates to a liquid crystal display device which can achieve wide angle of visibility and high contrast.

### 2. Description of the Related Art

Hitherto, a liquid crystal display device (LCD) is widely employed in a display unit such as personal computers, car navigators, digital still cameras, digital video cameras, cellular phones, liquid crystal televisions, personal digital assistances. However, the LCD is narrower in visual field in comparison with a CRT (Cathode-Ray Tube) in the related art, and hence improvement of angle-of-visibility characteristics has been required. For example, as a method of widening the angle of visibility, there are IPS (In-Plane-Switching) mode, MVA (Multi-domain Vertical Alignment) mode, and so on. These display modes, however, can improve the angle-of-visibility characteristics, but have disadvantages such that front brightness may be sacrificed, or the manufacturing process is complicated. More specifically, in IPS mode, a comb type electrode is necessary for applying electric field in lateral direction, and hence it is inevitable to employ a structure in which a numerical aperture is sacrificed. In the MVA mode, on the other hand, it is necessary to employ a structure like a projection or divide the electrode in order to cause the liquid crystal to tilt into a plurality of directions when applying voltage, and hence not only the numerical aperture is sacrificed, but also the manufacturing process becomes complicated. Therefore, in the status quo, an LCD of F-STN (Film-Super Twisted Nematic) mode, in which optical compensation is achieved using a phase-difference film, prevails in achievement of wide angle of visibility (for example, see Japanese Unexamined Patent Application Publication No. 2004-184967).

### SUMMARY OF THE INVENTION

In view of such circumstances in the related art, the present invention is intended to realize wider angle of visibility and higher contrast, and to provide a liquid crystal display device of a normally black mode whose manufacturing cost can be reduced.

In order to achieve the above-described objects, a liquid crystal display device according to the present invention includes: a liquid crystal panel including a pair of substrates being disposed so as to oppose to each other and having electrodes and alignment films formed respectively on the opposing surfaces thereof, and liquid crystal layer in which nematic liquid crystal encapsulated between the pair of substrates is aligned in the horizontal direction to be at substantially 0° in twist angle by giving a pretilt in a predetermined direction by the alignment film; a polarizing plate being arranged at least on the front side of the liquid crystal panel and being set in direction of polarization to provide a black level when a drive voltage to be applied between the electrodes is brought into an OFF state, and optical compensating means disposed at least on the side of one of the surfaces of the liquid crystal panel for performing optical compensation for the liquid crystal layer.

As described above, according to the liquid crystal display device of the present invention, the direction of polarization of the polarizing plate is set to provide the black level when the drive voltage to be applied between the electrodes is brought into the OFF state and, when the drive voltage is applied between the electrodes, horizontally aligned liquid crystal molecules of the liquid crystal layer are risen into the vertical direction with respect to the substrates, whereby a white level is provided. At this time, by the performance of the optical compensation for the liquid crystal layer by the optical compensation means, wider angle of visibility and higher contrast are achieved.

Nematic liquid crystal having a positive dielectric anisotropy can be used for the liquid crystal layer. When the liquid crystal panel is of transflective type or transmissive type, it is preferable to arrange the structure so that the polarizing plates are arranged on the front side and the back surface side, and a back light is arranged on the side of the polarizing plate on the back surface side opposite from the liquid crystal panel. The liquid crystal panel may be of reflective type.

According to the liquid crystal display device of the present invention, when the liquid crystal panel is of transflective type, a structure in which a pixel includes a reflecting portion for reflecting the incoming light from the substrate side on the front surface and a transmitting portion for transmitting the incoming light from the substrate side on the back surface, the optical compensation means includes a first optical compensation plate, a second optical compensation plate, and a quarter-wave plate in sequence from the liquid crystal panel side between the liquid crystal panel and the polarizing plate on the front side, and a third optical compensation plate, a fourth optical compensation plate, and a quarter-wave plate in sequence from the liquid crystal panel side between the liquid crystal panel and the polarizing plate on the back surface side may be employed.

In this case, preferably, the phase difference in a plane of the first optical compensation plate Δnd1 satisfies |Δnd1-Δndr|≤20 [nm], the azimuth angle of the first optical compensation plate is a+90°, the phase difference in a plane of the second optical compensation plate Δnd2 satisfies |Δnd2|≤20 [nm], the phase difference Rth of the second optical compensation plate in the direction of the thickness satisfies Rth<0, the phase difference in a plane of the third optical compensation plate Δnd3 satisfies |Δnd3-(Δndt-Δndr)| ≤20 [nm], the azimuth angle of the third optical compensation plate is a+90°, the phase difference in a plane of the fourth optical compensation plate Δnd4 satisfies |Δnd4|≤30 [nm], the phase difference Rth of the fourth optical compensation plate in the direction of the thickness satisfies Rth<0, and one or a plurality of the quarter-wave plates are provided, where Δndr represents a phase difference at the reflecting portion of the liquid crystal layer, Δndt represents a phase difference at the transmitting portion of the liquid crystal layer, and a° represents an alignment of the liquid crystal molecules of the liquid crystal layer (Rth={(nx+ny)/2-nz}d, where nx represents a refractive index of the optical compensation plate in the direction of the phase lag axis, ny represents a refractive index of the optical compensation plate in the direction of the phase advance axis, nz represents a refractive index of the optical compensation plate in the direction of the thickness, and d represents the thickness of the optical compensation plate). Accordingly, the wider angle of visibility and higher contrast are achieved.

According to the liquid crystal display device of the present invention, when the liquid crystal panel is of the transflective type, a structure in which the pixel includes the reflecting portion for reflecting the incoming light from the substrate side on the front surface and the transmitting portion for transmitting the incoming light from the substrate side on the back surface, the optical compensation means includes a fifth optical compensation plate and the quarter-wave plate in sequence from the liquid crystal panel side between the liquid crystal panel and the polarizing plate on the front side, and a sixth optical compensation plate and the quarter-wave plate in sequence from the liquid crystal panel side between the liquid crystal panel and the polarizing plate on the back surface side may be employed.

In this case, preferably, the phase difference in a plane of the fifth optical compensation plate Δnd5 satisfies |Δnd5-Δndr|≤20 [nm], the azimuth angle of the fifth optical compensation plate is a+90°, the Nz coefficient of the fifth optical compensation plate is Nz<1, the phase difference Δnd6 in a plane of the sixth optical compensation plate satisfies |Δnd6-(Δndt-Δndr)| ≤20 [nm], the azimuth angle of the sixth optical compensation plate is a+90°, the Nz coefficient of the sixth optical compensation plate is Nz<1, and one or a plurality of the quarter-wave plates are provided, where Δndr represents a phase difference at the reflecting portion of the liquid crystal layer, Δndt represents a phase difference at the transmitting portion of the liquid crystal layer, and a^{o} represents an alignment of the liquid crystal molecules of the liquid crystal layer (Nz=(nx-nz)/(nx-ny), where nx represents a refractive index of the optical compensation plate in the direction of a phase lag axis, ny represents a refractive index of the optical compensation plate in the direction of the phase advance axis, nz represents 'a refractive index of the optical compensation plate in the direction of the thickness, and d represents the thickness of the optical compensation plate). Accordingly, wider angle of visibility and higher contrast are achieved.

According to the liquid crystal display device of the present invention, when the liquid crystal panel is of the transflective type, a structure in which the pixel includes the reflecting portion for reflecting the incoming light from the substrate side on the front surface and the transmitting portion for transmitting the incoming light from the substrate side on the back surface, the optical compensation means includes a seventh optical compensation plate and the quarter-wave plate in sequence from the liquid crystal panel side between the liquid crystal panel and the polarizing plate on the front side, and an eighth optical compensation plate and the quarter-wave plate in sequence from the liquid crystal panel side between the liquid crystal panel and the polarizing plate on the back surface side may be employed.

In this case, preferably, the seventh optical compensation plate is fabricated so that an optical axis thereof is inclined, and the phase difference Δnd7 in a plane of the seventh optical compensation plate satisfies |Δnd7-Δndr|≤20 [nm], the azimuth angle of the seventh optical compensation plate is a+90°, the Nz coefficient of the seventh optical compensation plate satisfies Nz<1, the angle of inclination of the optical axis of the seventh optical compensation plate substantially coincides with the pretilt angle of the liquid crystal layer, the eighth optical compensation plate is fabricated so that the optical axis thereof inclines, and the phase difference Δnd8 in a plane of the eighth optical compensation plate satisfies |Δnd8-(Δndt-Δndr)| ≤ 20 [nm], the azimuth angle of the eighth optical compensation plate is a+90°, the Nz coefficient of the eighth optical compensation plate satisfies Nz<1, the angle of inclination of the optical axis of the eight optical compensation plate substantially coincides with the pretilt angle of the liquid crystal layer, and one or a plurality of the quarter-wave plates are provided, where Δndr represents a phase difference at the reflecting portion of the liquid crystal layer, Δndt represents a phase difference at the transmitting portion of the liquid crystal layer, and a° represents the alignment of the liquid crystal molecules of the liquid crystal layer, (Nz=(nx-nz)/(nx-ny), where nx represents a refractive index of the optical compensation plate in the direction of the phase lag axis, ny represents a refractive index of the optical compensation plate in the -direction of the phase advance axis, nz represents a refractive index of the optical compensation plate in the direction of the thickness, and d represents the thickness of the optical compensation plate). Accordingly, wider angle of visibility and higher contrast are achieved.

According to the liquid crystal display device of the present invention, when the liquid crystal panel is of the reflective type, a structure in which the optical compensation means includes a ninth optical compensation plate, a tenth optical compensation plate, and the quarter-wave plate in sequence from the liquid crystal panel side between the liquid crystal panel and the polarizing plate on the front surface side may be employed.

In this case, preferably, the phase difference Δnd9 in a plane of the ninth optical compensation plate satisfies |Δnd9-Δndr| ≤20 [nm], the azimuth angle of the ninth optical compensation plate is a+90°, the phase difference Δnd10 in a plane of the tenth optical compensation plate satisfies |Δnd10|≤20 [nm], the phase difference Rth of the tenth optical compensation plate in the direction of the thickness is Rth<0, and one or a plurality of the quarter wave plates are provided, where Δndr represents a phase difference of the liquid crystal layer, and a° represents the alignment of the liquid crystal molecules of the liquid crystal layer, (Rth={(nx+ny)/2-nz}d, where nx represents a refractive index of the optical compensation plate in the direction of the phase lag axis, ny represents a refractive index of the optical compensation plate in the direction of the phase advance axis, nz represents a refractive index of the optical compensation plate in the direction of the thickness, and d represents the thickness of the optical compensation plate). Accordingly, wider angle of visibility and higher contrast are achieved.

According to the liquid crystal display device of the present invention, when the liquid crystal panel is of the reflective type, a structure in which the optical compensation means includes an eleventh optical compensation plate and the quarter-wave plate in sequence from the liquid crystal panel side between the liquid crystal panel and the polarizing plate on the front surface side may be employed.

In this case, preferably, the phase difference Δdn11 in a plane of the eleventh optical compensation plate satisfies |Δnd11-Δndr| ≤ 20[nm], the azimuth angle of the eleventh optical compensation plate is a+90°, the Nz coefficient of the eleventh optical compensation plate is Nz<1, and one or a plurality of the quarter-wave plates are provided, where Δndr represents a phase difference of the liquid crystal layer, and a° represents the alignment of the liquid crystal molecules of the liquid crystal layer, (Nz=(nx-nz)/(nx-ny), where nx represents a refractive index of the optical compensation plate in the direction of the phase lag axis, ny represents a refractive index of the optical compensation plate in the direction of the phase advance axis, nz represents a refractive index of the optical compensation plate in the direction of the thickness, and d represents the thickness of the optical compensation plate). Accordingly, wider angle of visibility and higher contrast are achieved.

According to the liquid crystal display device of the present invention, when the liquid crystal panel is of the reflective type, a structure in which the optical compensation means includes a twelfth optical compensation plate and the quarter-wave plate in sequence from the liquid crystal panel side between the liquid crystal panel and the polarizing plate on the front side may be employed.

In this case, preferably, the twelfth optical compensation plate is fabricated so that the optical axis thereof is inclined, the phase difference Δnd12 in a plane of the twelfth optical compensation plate satisfies |Δnd12-Δndr| ≤ 20 [nm], the azimuth angle of the twelfth optical compensation plate is a+90°, the Nz coefficient of the twelfth optical compensation plate satisfies Nz<1 the angle of inclination of the optical axis of the twelfth optical compensation plate substantially coincides with the pretilt angle of the liquid crystal layer, and one or a plurality of the quarter-wave plates are provided, where Δndr represents a phase difference of the liquid crystal layer, and a^{o} represents the alignment of the liquid crystal molecules of the liquid crystal layer (Nz=(nx-nz)/(nx-ny), where nx represents a refractive index of the optical compensation plate in the direction of the phase lag axis, ny represents a refractive index of the optical compensation plate in the direction of the phase advance axis, nz represents a refractive index of the optical compensation plate in the direction of the thickness, and d represents the thickness of the optical compensation plate). Accordingly, wider angle of visibility and higher contrast are achieved.

According to the liquid crystal display device of the present invention, when the liquid crystal panel is of the transmissive type, a structure in which the optical compensation means includes a thirteenth optical compensation plate and a fourteenth optical compensation plate in sequence from the liquid crystal panel side between the liquid crystal panel and the polarizing plate on the front side or on the back surface side may be employed.

In this case, preferably, the phase difference Δnd13 in a plane of the thirteenth optical compensation plate satisfies |Δnd13-Δndt|≤20 [nm], the azimuth angle of the thirteenth optical compensation plate is a+90°, the phase difference Δnd14 in a plane of the fourteenth optical compensation plate satisfies |Δnd14|≤20 [nm], the phase difference Rth of the fourteenth optical compensation plate in the direction of the thickness satisfies Rth<0 where Δndt represents a phase difference of the liquid crystal layer, and a° represents the alignment of the liquid crystal molecules of the liquid crystal layer, (Rth={(nx+ny)/2-nz}d, where nx represents a refractive index of the optical compensation plate in the direction of the phase lag axis, ny represents a refractive index of the optical compensation plate in the direction of the phase advance axis, nz represents a refractive index of the optical compensation plate in the direction of the thickness, and d represents the thickness of the optical compensation plate). Accordingly, wider angle of visibility and higher contrast are achieved.

According to the liquid crystal display device of the present invention, when the liquid crystal panel is of the transmissive type, a structure in which the optical compensation means includes a fifteenth optical compensation plate between the liquid crystal panel and the polarizing plate on the front side or the back surface side.

In this case, preferably, the phase difference Δnd15 in a plane of the fifteenth optical compensation plate satisfies |Δnd15-Δndt|≤20 [nm], the azimuth angle of the fifteenth optical compensation plate is a+90°, and the Nz coefficient of the fifteenth optical compensation plate satisfies Nz<1, where Δndt represents a phase difference of the liquid crystal layer, and a° represents the alignment of the liquid crystal molecules of the liquid crystal layer (Nz=(nx-nz)/(nx-ny), where nx represents a refractive index of the optical compensation plate in the direction of the phase lag axis, ny represents a refractive index of the optical compensation plate in the direction of the phase advance axis, nz represents a refractive index of the optical compensation plate in the direction of the thickness, and d represents the thickness of the optical compensation plate). Accordingly, wider angle of visibility and higher contrast are achieved.

According to the liquid crystal display device of the present invention, when the liquid crystal panel is of the transmissive type, a structure in which the optical compensation means includes a sixteenth optical compensation plate between the liquid crystal panel and the polarizing plate on the front surface or back surface side may be employed.

In this case, preferably, the sixteenth optical compensation plate is fabricated so that the optical axis thereof is inclined, the phase difference Δnd16 in a plane of the sixteenth optical compensation plate satisfies |Δnd16-Δndt|≤ 20 [nm], the azimuth angle of the sixteenth optical compensation plate is a+90°, the Nz coefficient of the sixteenth optical compensation plate satisfies Nz<1, the inclination angle of the optical axis of the sixteenth optical compensation plate substantially coincides with the pretilt angle of the liquid crystal layer, where Δndt represents a phase difference of the liquid crystal layer, and a° represents the alignment of the liquid crystal molecules of the liquid crystal layer (Nz=(nx-nz)/(nx-ny), where nx represents a refractive index of the optical compensation plate in the direction of the phase lag axis, ny represents a refractive index of the optical compensation plate in the direction of the phase advance axis, nz represents a refractive index of the optical compensation plate in the direction of the thickness, and d represents the thickness of the optical compensation plate). Accordingly, wider angle of visibility and higher contrast are achieved.

As described above, in the liquid crystal display device of the present invention, by performing optical compensation with respect to the liquid crystal layer by the optical compensation means when display in the normally black mode is effected while switching the liquid crystal molecules in the liquid crystal layer aligned in the horizontal direction using a vertical electric field, wider angle of visibility and higher contrast are achieved, and in addition, the manufacturing cost can be reduced.

### BRIEF DESCRIPTION OF THE DRAWINGS

Fig. 1 is a pattern diagram showing a structural example of a transflective liquid crystal display device shown as a first embodiment;
Fig. 2 is a pattern diagram showing a structural example of a transflective liquid crystal display device shown as a second embodiment;
Fig. 3 is a pattern diagram showing a structural example of a transflective liquid crystal display device shown as a third embodiment;
Fig. 4 is a pattern diagram showing a structural example of a reflective liquid crystal display device shown as a fourth embodiment;
Fig. 5 is a pattern diagram showing a structural example of a reflective liquid crystal display device shown as a fifth embodiment;
Fig. 6 a pattern diagram showing a structural example of a reflective liquid crystal display device shown as a sixth embodiment;
Fig. 7 is a pattern diagram showing a structural example of a transmissive liquid crystal display device shown as a seventh embodiment;
Fig. 8 a pattern diagram showing a modification of the transmissive liquid crystal display device shown as the seventh embodiment;
Fig. 9 is a pattern diagram showing a structural example of a transmissive liquid crystal display device shown as an eighth embodiment;
Fig. 10 a pattern diagram showing a modification of the transmissive liquid crystal display device shown as the eighth embodiment;
Fig. 11 is a pattern diagram showing a structural example of a transmissive liquid crystal display device shown as a ninth embodiment;
Fig. 12 is a pattern diagram showing a modification of the transmissive liquid crystal display device shown as the ninth embodiment;
Fig. 13 is a graph showing angle-of-visibility characteristics in the vertical direction in a transflective liquid crystal display device according to Example 1.
Fig. 14 is a graph showing the angle-of-visibility characteristics in the horizontal direction in the transflective liquid crystal display device according to Example 1;
Fig. 15 is an equi-contrast radar chart showing the angle-of-visibility characteristics in the transflective liquid crystal display device according to Example 1.
Fig. 16 is a graph showing the angle-of-visibility characteristics in the vertical direction in a transflective liquid crystal display device according to Comparative Example 1;
Fig. 17 is a graph showing the angle-of-visibility characteristics in the horizontal direction in the transflective liquid crystal display device according to Comparative Example 1; and
Fig. 18 is an equi-contrast radar chart showing an angle-of-visibility-dependency of the transflective liquid crystal display device according to Comparative Example 1.

### DESCRIPTION OF THE PREFERRED EMBODIMENTS

Referring now to the drawings, a liquid crystal display device to which the present invention is applied will be described in detail.

In the drawings used for description below, respective components are shown as a frame format for convenience, and the ratios in dimension among the respective components are not necessarily the same as the actual device.

### First Embodiment

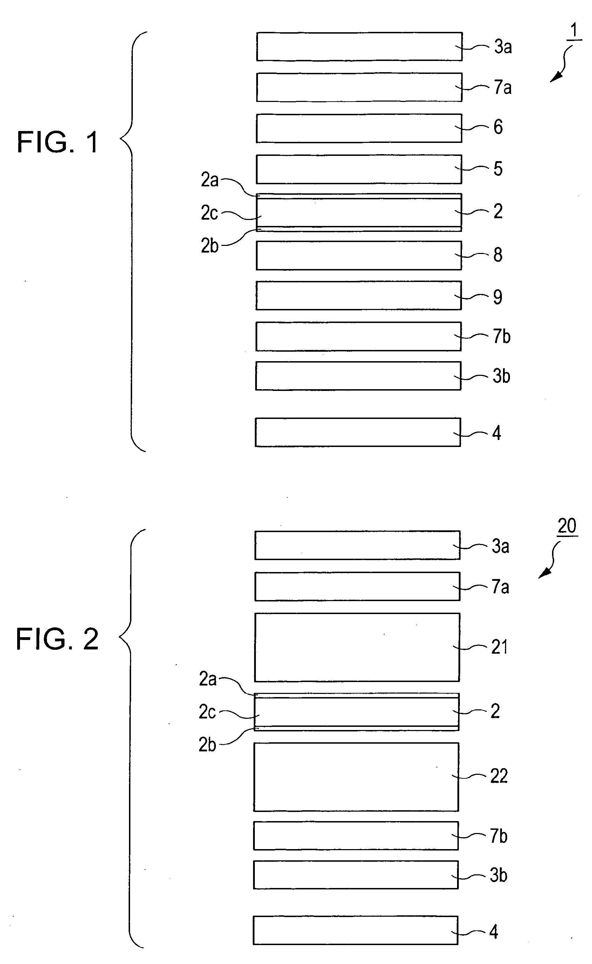

Firstly, a transflective liquid crystal display device 1 shown in Fig. 1 will be described as a first embodiment of the present invention. The transflective liquid crystal display device 1, shown in Fig. 1, includes a liquid crystal panel 2, polarizing plates 3a, 3b arranged on the front side and the back surface side of the liquid crystal panel 2, and a back light 4 arranged on the side of the polarizing plate 3b on the back side opposite from the liquid crystal panel 2.

The liquid crystal panel 2 includes a transparent substrate 2a formed with a transparent electrode and an alignment film that covers the transparent electrode formed on one main surface thereof, an active matrix substrate 2b arranged so as to oppose to the transparent substrate 2a and formed with a plurality of switching elements and pixel electrodes corresponding to the respective pixels and an alignment film that covers the plurality of pixel electrodes on a main surface opposing to the transparent electrode, and a liquid crystal layer 2c interposed between the alignment film on the side of the transparent substrate 2a and the alignment film on the side of the active matrix substrate 2b. The opposing distance of the transparent substrate 2 and a drive circuit substrate 3 is maintained from each other by a spacer, and the peripheral portions thereof are sealed by a sealing member. Color display of the liquid crystal panel 2 is enabled by the provision of color filters in red (R), green (G), and blue (B) for each pixel.

The liquid crystal layer 2c is a nematic liquid crystal having a positive dielectric anisotropy and being encapsulated between the alignment film on the side of the transparent substrate 2a and the alignment film 19 on the side of the active matrix substrate 2b, which is a so-called horizontally aligned (homogeneous) liquid crystal in which liquid crystal molecules are pretilted in a predetermined direction into a horizontal alignment by these alignment films so that the twist angle becomes about 0°. In some cases, the nematic liquid crystal having a negative dielectric anisotropy, which is transformed to have the horizontal alignment by the alignment film may be employed. The direction of pretilting, that is, the direction of alignment of the liquid crystal molecules is set so that the transmission factor reaches a maximum value when a drive voltage is applied by the combination of the polarizing plates 3a, 3b or the like. On the other hand, the directions of polarization of the polarizing plates 3a, 3b are set to provide a black level when the drive voltage is brought to the OFF state. The pretilt angle is controlled within an angular range of several degrees since the horizontal alignment of the liquid crystal molecules is deteriorated if the pretilt angle is too large. The back light 4 includes an optical waveguide formed of a flat transparent acryl resin or the like, and a light source formed of a cathode fluorescent tube or LED (Light Emitting Diode) or the like. Light emitted from the light source is transformed into a plane emission by the optical waveguide and is irradiated onto the back surface side of the liquid crystal panel 2.

The liquid crystal panel 2 is of the transflective type, in which the transparent substrate 2a and the active matrix substrate 2b are formed of transparent glass plates, and the pixel electrode is formed of metal material having a high reflectance. In addition, the pixel electrode is formed with a reflecting portion for reflecting the incoming light from the side of the transparent substrate 2a on the front surface and a transmitting portion for transmitting the incoming light from the side of the active matrix substrate 2b on the back surface side to transmit therethrough via a through hole formed on a part thereof. A shoulder is formed between the reflecting portion and the transmitting portion to achieve optimal display. Therefore, the thicknesses of the reflecting portion and the transmitting portion of the liquid crystal layer 2c are different, and the thickness of the liquid crystal layer 2c at the reflecting portion is generally half the thickness of the liquid crystal layer 2c at the transmitting portion.

The transflective liquid crystal display device 1 includes a first optical compensation plate 5, a second optical compensation plate 6, and a quarter-wave plate 7a in sequence from the side of the liquid crystal panel 2 between the liquid crystal panel 2 and the polarizing plate 3a on the front side, a third optical compensation plate 8, a fourth optical compensation plate 9, and a quarter-wave plate 7b in sequence from the side of the liquid crystal panel 2 between the liquid crystal panel 2 and the polarizing plate 3a on the back surface side as optical compensation means for performing optical compensation for the liquid crystal layer 2c of the above described liquid crystal panel 2 of the transflective type. In other words, the transflective liquid crystal display device 1 has a structure in which the polarizing plate 3a, the quarter-wave plate 7a, the second optical compensation plate 6, the first optical compensation plate 5, the liquid crystal panel 2, the third optical compensation plate 8, the fourth optical compensation plate 9, the quarter-wave plate 7b, the polarizing plate 3b, and the back light 4 are laminated in sequence from the front side and combined to each other.

Among these elements, the first optical compensation plate 5 is formed of an optically uniaxial phase difference film (A plate) for compensating mainly the phase difference in the direction toward the front, and the phase difference Δnd1 in a plane is set to be |Δnd1-Δndr| ≤ 20 [nm] (preferably, Δnd1=Δndr), and the azimuth angle thereof is set to be a+90°. The second optical compensation plate 6 is formed of an optically biaxial phase difference film (C plate) for compensating the phase difference mainly in the oblique direction, and the phase difference Δnd2 in a plane is set to be |Δnd2| ≤ 20 [nm] (preferably, Δnd2=0), and the phase difference Rth in the direction of the thickness is set to be Rth<0. The third optical compensation plate 8 is formed of the optically uniaxial phase difference film (A plate) for compensating the phase difference mainly in the direction toward the front, and the phase difference Δnd3 in a plane is set to be |Δnd3-(Δndt-Δndr)| ≤ 20 [nm] (preferably Δnd3=Δndt-Δndr), and the azimuth angle is set to be a+90°. The fourth optical compensation plate 9 is formed of the optically biaxial phase different film (C plate) for compensating the phase difference mainly in the oblique direction, and the phase difference Δnd4 in a plane is set to be |Δnd4| ≤ 20 [nm] (preferably, Δnd4=0), and the phase difference Rth in the direction of the thickness is set to be Rth<0. The quarter-wave plates 7a, 7b are composed of one or plurality of plates.

The Δndr represents a phase difference at the reflecting portion of the liquid crystal layer 2c, Δndt represents a phase difference at the transmitting portion of the liquid crystal layer 2c, and a° represents an alignment of the liquid crystal molecules of the liquid crystal layer 2c. The Rth is represented by Rth={(nx+ny)/2-nz}d, where nx represents a refractive index of the optical compensation plate in the direction of the phase lag axis, ny represents a refractive index of the optical compensation plate in the direction of the phase advance axis, nz represents a refractive index of the optical compensation plate in the direction of the thickness, and d represents the thickness of the optical compensation plate.

The transflective liquid crystal display device 1 having the structure as described above has a reflective display function and a transmissive display function. In the case of the reflective display, the incoming light from the front surface side is passed through the polarizing plate 3a and converted into a linearly polarized light, then is converted into a circularly polarized light by the quarter-wave plate 7a, then is converted into an elliptically polarized light through the second optical compensation plate 6 and the first optical compensation plate 5, and then enters into the liquid crystal panel 2. Then, the light entered into the liquid crystal panel 2 is converted into a circularly polarized light while passing through the liquid crystal layer 2c of the liquid crystal panel 2, and after having reflected on the reflecting portions of the pixel electrodes, is converted into an elliptically polarized light while passing through the liquid crystal layer 2c as the reflecting light, and goes out from the liquid crystal panel 2. Then, the outgoing light from the liquid crystal panel 2 is converted into a circularly polarized light while passing through the first optical compensation plate 5 and the second optical compensation plate 6, then is converted into a linearly polarized light by the quarter-wave plate 7a, and then enters into the polarizing plate 3a.

Here, when no voltage is applied, the outgoing light from the second optical compensation plate 6 assumes a circularly polarized light in the opposite direction from the incoming direction. Therefore, the light which is finally converted into the linearly polarized light by the quarter-wave plate 7a is blocked by the polarizing plate 3a. Accordingly, black display which is referred to as a normally black mode is effected. On the other hand, when the voltage is applied, the outgoing light from the second optical compensation plate 6 is modulated while being passed through the liquid crystal layer 2c and assumes the circularly polarized light in the same direction as the incoming direction. Therefore, the light which is finally converted into the linearly polarized light by the quarter-wave plate 7a passes through the polarizing plate 3a. Accordingly, a white level is provided.

On the other hand, in the case of the transmissive display, light emitted from the back light 4 passes through the polarizing plate 3b and is converted into a linearly polarized light, then is converted into a circularly polarized light by the quarter wave plate 7a, and then is converted into an elliptically polarized light through the fourth optical compensation plate 9 and the third optical compensation plate 8, and enters into the liquid crystal panel 2. Then, the light entered into the liquid crystal panel 2 passes through the transmitting portions of the pixel electrodes, and goes out from the liquid crystal panel while passing through the liquid crystal layer 2c of the liquid crystal panel 2 as the transmitting light. Then, the outgoing light from the liquid crystal panel 2 is converted into a circularly polarized light while passing through the first optical compensation plate 5 and the second optical compensation plate 6, and then is converted into the linearly polarized light by the quarter-wave plate 7a, and enters into the polarizing plate 3a.

Here, when no voltage is applied, the outgoing light from the second optical compensation plate 6 assumes the circularly polarized light in the opposite direction from the incoming direction. Therefore, the light which is finally converted into the linearly polarized light by the quarter-wave plate 7a is blocked by the polarizing plate 3a. Accordingly, black display which is referred to as the normally black mode is effected. On the other hand, when voltage is applied, the outgoing light from the second optical compensation plate 6 is modulated while passing through the liquid crystal layer 2c and assumes the circularly polarized light in the same direction as the incoming direction. Therefore, the light which is finally converted into the linearly polarized light by the quarter-wave plate 7a passes through the polarizing plate 3a. Accordingly, the white level is provided.

As described above, in the transflective liquid crystal display device 1, the direction of polarization of the polarizing plates 3a, 3b is set to provide the black level when no voltage is applied, and the horizontally aligned liquid crystal molecules of the liquid crystal layer 2c are risen into the vertical direction with respect to the substrate when voltage is applied, whereby the white level is provided. At this time, optical compensation is performed by the first to the fourth optical compensation plates 5, 6, 8, 9 as the optical compensation means for the liquid crystal layer 2c, whereby wider angle of visibility and higher contrast are realized. Therefore, in the transflective liquid crystal display device 1, wider angle of visibility and higher contrast for effecting display in the normally black mode by using the liquid crystal panel 2 with horizontally aligned liquid crystal molecules can be achieved and, in addition, it is not necessary to configure the liquid crystal panel 2 in a complicated structure. Consequently, the manufacturing cost can be reduced significantly.

### Second Embodiment

Subsequently, a transflective liquid crystal display device 20 shown in Fig. 2 will be described as a second embodiment of the present invention. In the following description, similar parts to the transflective liquid crystal display device 1 shown in Fig. 1 will not be described, and are represented by the same reference numerals.

The transflective liquid crystal display device 20 includes a fifth optical compensation plate 21 and the quarter-wave plate 7a in sequence from the side of the liquid crystal panel 2 between the liquid crystal panel 2 and the polarizing plate 3a on the front side, and a sixth optical compensation plate 22 and the quarter-wave plate 7b in sequence from the side of the liquid crystal panel 2 between the liquid crystal 2 and the polarizing plate 3b on the back surface side instead of the first to fourth optical compensation plates 5, 6, 8, 9 of the transflective liquid crystal display device 1. In other words, the transflective liquid crystal display device 20 has a structure in which the polarizing plate 3a, the quarter-wave plate 7a, the fifth optical compensation plate 21, the liquid crystal panel 2, the sixth optical compensation plate 22, the quarter-wave plate 7a, the polarizing plate 3b, and the back light 4 are laminated in sequence from the front side and combined to each other.

Among these elements, the fifth optical compensation plate 21 is formed of the optically biaxial phase difference film for compensating mainly the phase difference in the direction toward the front and in the oblique direction, and has functions of both of the first and second optical compensation plates 5, 6 described above. In other words, as regards the fifth optical compensation plate 21, the phase difference Δnd5 in a plane is set to be |Δnd5-Δndr| ≤ 20 [nm] (preferably, Δnd5=Δndr), the azimuth angle is set to be a+90°, and the Nz coefficient is set to be Nz<1 The sixth optical compensation plate 22 has functions of both of the third and fourth optical compensation plates 7, 8 described above. In other words, as regards the sixth optical compensation plate 22, the phase difference Δnd6 in a plane is set to be |Δnd6-(Δndt-Δndr)|≤ 20 [nm] (preferably, Δnd6=Δndt-Δndr), the azimuth angle is set to be a+90°, and the Nz coefficient is set to be Nz<1 The quarter-wave plates 7a, 7b are composed of one or plurality of plates.

The NZ coefficient is represented by Nz=(nx-nz)/(nx-ny), where nx represents a refractive index of the optical compensation plate in the direction of the phase lag axis, ny represents a refractive index of the optical compensation plate in the direction of the phase advance axis, nz represents a refractive index of the optical compensation plate in the direction of the thickness, and d represents the thickness of the optical compensation plate.

The transflective liquid crystal display device 20 having the structure as described above has the reflective display function and the transmissive display function. In the case of the reflective display, the incoming light from the front surface side is passed through the polarizing plate 3a and converted into a linearly polarized light, then is converted into a circularly polarized light by the quarter-wave plate 7a, then is converted into an elliptically polarized light through the fifth optical compensation plate 21, and then enters into the liquid crystal panel 2. Then, the light entered into the liquid crystal panel 2 is converted into the circularly polarized light while passing through the liquid crystal layer 2c of the liquid crystal panel 2, and after having reflected on the reflecting portions of the pixel electrodes, is converted into an elliptically polarized light while passing through the liquid crystal layer 2c as the reflecting light, and goes out from the liquid crystal panel 2. Then, the outgoing light from the liquid crystal panel 2 is converted into a circularly polarized light while passing through the fifth optical compensation plate 21, then is converted into a linearly polarized light by the quarter-wave plate 7a, and then enters into the polarizing plate 3a.

Here, when no voltage is applied, the outgoing light from the fifth optical compensation plate 21 assumes a circularly polarized light in the opposite direction from the incoming direction. Therefore, the light which is finally converted into the linearly polarized light by the quarter-wave plate 7a is blocked by the polarizing plate 3a. Accordingly, black display which is referred to as a normally black mode is effected. On the other hand, when the voltage is applied, outgoing light from the fifth optical compensation plate 21 is modulated while being passed through the liquid crystal layer 2c and assumes the circularly polarized light in the same direction as the incoming direction. Therefore, the light which is finally converted into the linearly polarized light by the quarter-wave plate 7a passes through the polarizing plate 3a. Accordingly, the white level is provided.

On the other hand, in the case of the transmissive display, light emitted from the back light 4 passes through the polarizing plate 3b and is converted into a linearly polarized light, then is converted into a circularly polarized light by the quarter wave plate 7a, and then is converted into an elliptically polarized light through the sixth optical compensation plate 22, and enters into the liquid crystal panel 2. Then, the light entered into the liquid crystal panel 2 passes through the transmitting portions of the pixel electrodes, and goes out from the liquid crystal panel while passing through the liquid crystal layer 2c of the liquid crystal panel 2 as a transmitting light. Then, the outgoing light from the liquid crystal panel 2 is converted into a circularly polarized light while passing through the fifth optical compensation plate 21, and is converted into a linearly polarized light by the quarter-wave plate 7a, and enters into the polarizing plate 3a.

Here, when no voltage is applied, the outgoing light from the fifth optical compensation plate 21 assumes the circularly polarized light in the opposite direction from the incoming direction. Therefore, the light which is finally converted into the linearly polarized light by the quarter-wave plate 7a is blocked by the polarizing plate 3a. Accordingly, black display which is referred to as the normally black mode is effected. On the other hand, when a voltage is applied, outgoing light from the fifth optical compensation plate 21 is modulated while passing through the liquid crystal layer 2c, and assumes the circularly polarized light in the same direction as the incoming direction. Therefore, the light which is finally converted into the linearly polarized light by the quarter-wave plate 7a passes through the polarizing plate 3a. Accordingly, the white level is provided.

As described above, in the transflective liquid crystal display device 20, the direction of polarization of the polarizing plates 3a, 3b is set to provide the black level when no voltage is applied, and the horizontally aligned liquid crystal molecules of the liquid crystal layer 2c which are aligned in the horizontal direction are risen into the vertical direction with respect to the substrate when a voltage is applied, whereby the white level is provided. At this time, optical compensation is performed by the fifth and sixth optical compensation plates 21, 22 as the optical compensation means for the liquid crystal layer 2c, whereby the wider angle of visibility and higher contrast are realized and the number of components can be reduced. Therefore, in the transflective liquid crystal display device 20, wider angle of visibility and higher contrast for effecting display in the normally black mode by using the liquid crystal panel 2 with horizontally aligned liquid crystal molecules can be achieved and, in addition, it is not necessary to configure the liquid crystal panel 2 in a complicated structure. Consequently, the manufacturing cost can be reduced significantly.

### Third Embodiment

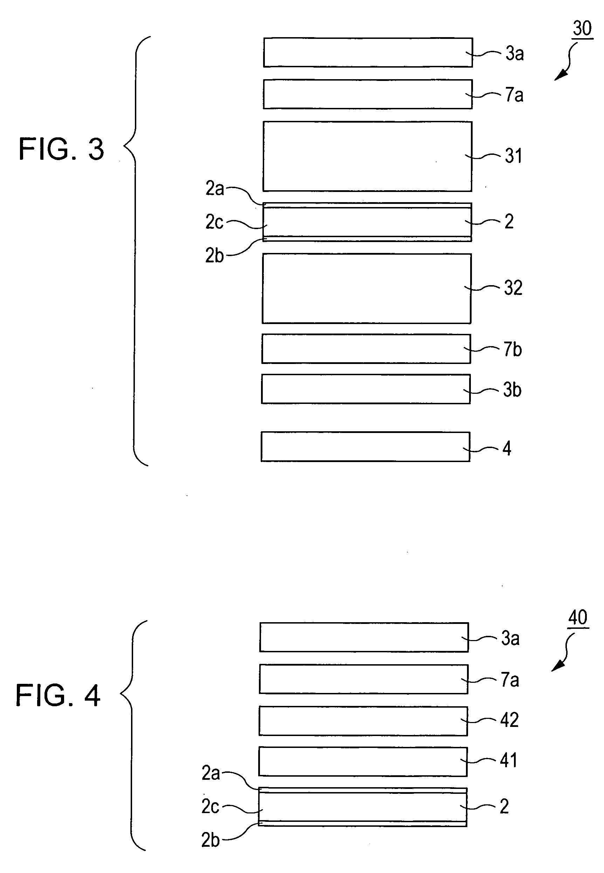

Subsequently, a transflective liquid crystal display device 30 shown in Fig. 3 will be described as a third embodiment of the present invention. In the following description, similar parts to the transflective liquid crystal display device 1 shown in Fig. 1 will not be described, and are represented by the same reference numerals.

The transflective liquid crystal display device 30 includes the seventh optical compensation plate 31 and the quarter-wave plate 7a in sequence from the side of the liquid crystal panel 2 between the liquid crystal panel 2 and the polarizing plate 3a on the front side, and an eighth optical compensation plate 32 and the quarter-wave plate 7b in sequence from the side of the liquid crystal panel '2 between the liquid crystal 2 and the polarizing plate 3b on the back surface side instead of the fifth and sixth optical compensation plates 21, 22 of the transflective liquid crystal display device 20. In other words, the transflective liquid crystal display device 30 has a structure in which the polarizing plate 3a, the quarter-wave plate 7a, the seventh optical compensation plate 31, the liquid crystal panel 2, the eighth optical compensation plate 32, the quarter-wave plate 7b, the polarizing plate 3b, and the back light 4 are laminated in sequence from the front side and combined to each other.

Among these elements, the seventh optical compensation plate 31 is formed of the obliquely aligned phase difference film fabricated so that the optical axis thereof is inclined, and has a function for compensating a pretilt angle of the liquid crystal layer 2c in addition to the function of the fifth optical compensation plate 21. In other words, as regards the seventh optical compensation plate 31, the phase difference Δnd7 in a plane is set to be |Δnd7-Δndr| ≤ 20 [nm] (preferably, Δnd7=Δndr), the azimuth angle is set to be a+90°, the Nz coefficient is set to be Nz<1 and the angle of inclination of the optical axis is set to substantially coincide with the pretilt angle of the liquid crystal layer 2c. The eighth optical compensation plate 32 is formed of the obliquely aligned phase difference film fabricated so that the optical axis is inclined, and has a function for compensating the pretilt angle of the liquid crystal layer 2c in addition to the function of the sixth optical compensation plate 22. In other words, as regards the eighth optical compensation plate 32, the phase difference Δnd8 in a plane is set to be |Δnd8-(Δndt-Δndr)| ≤ 20 [nm] (preferably, Δnd8=Δndt-Δndr), the azimuth angle is set to be a+90°, the Nz coefficient is set to be Nz<1 and the angle of inclination of the optical axis is set to substantially coincide with the pretilt angle of the liquid crystal layer 2c. The quarter-wave plates 7a, 7b are composed of one or plurality of plates.

The transflective liquid crystal display device 30 having the structure as described above has the reflective display function and the transmissive display function. In the case of the reflective display, the incoming light from the front surface side is passed through the polarizing plate 3a and converted into a linearly polarized light, then is converted into a circularly polarized light by the quarter-wave plate 7a, then is converted into an elliptically polarized light through the seventh optical compensation plate 31, and then enters into the liquid crystal panel 2. Then, the light entered into the liquid crystal panel 2 is converted into the circularly polarized light while passing through the liquid crystal layer 2c of the liquid crystal panel 2, and after having reflected on the reflecting portions of the pixel electrodes, is converted into an elliptically polarized light while passing through the liquid crystal layer 2c as the reflecting light, and goes out from the liquid crystal panel 2. Then, the outgoing light from the liquid crystal panel 2 is converted into a circularly polarized light while passing through the seventh optical compensation plate 31, then is converted into a linearly polarized light by the quarter-wave plate 7a, and then enters into the polarizing plate 3a.

Here, when no voltage is applied, the outgoing light from the seventh optical compensation plate 31 assumes a circularly polarized light in the opposite direction from the incoming direction. Therefore, the light which is finally converted into the linearly polarized light by the quarter-wave plate 7a is blocked by the polarizing plate 3a. Accordingly, black display which is referred to as a normally black mode is effected. On the other hand, when the voltage is applied, the outgoing light from the seventh optical compensation plate 31 is modulated while being passed through the liquid crystal layer 2c and assumes the circularly polarized light in the same direction as the incoming direction. Therefore, the light which is finally converted into the linearly polarized light by the quarter-wave plate 7a passes through the polarizing plate 3a. Accordingly, the white level is provided.

On the other hand, in the case of the transmissive display, light emitted from the back light 4 passes through the polarizing plate 3b and is converted into a linearly polarized light, then is converted into a circularly polarized light by the quarter wave plate 7a, and then is converted into an elliptically polarized light through the eighth optical compensation plate 32, and enters into the liquid crystal panel 2. Then, the light entered into the liquid crystal panel 2 passes through the transmitting portions of the pixel electrodes, and goes out from the liquid crystal panel while passing through the liquid crystal layer 2c of the liquid crystal panel 2 as a transmitting light. Then, the outgoing light from the liquid crystal panel 2 is converted into a circularly polarized light while passing through the seventh optical compensation plate 31, and is converted into a linearly polarized light by the quarter-wave plate 7a, and enters into the polarizing plate 3a.

Here, when no voltage is applied, the outgoing light from the seventh optical compensation plate 31 assumes the circularly polarized light in the opposite direction from the incoming direction. Therefore, the light which is finally converted into the linearly polarized light by the quarter-wave plate 7a is blocked by the polarizing plate 3a. Accordingly, black display which is referred to as the normally black mode is effected. On the other hand, when voltage is applied, the outgoing light from the seventh optical compensation plate 31 is modulated while passing through the liquid crystal layer 2c, and assumes the circularly polarized light in the same direction as the incoming direction. Therefore, the light which is finally converted into the linearly polarized light by the quarter-wave plate 7a passes through the polarizing plate 3a. Accordingly, the white level is provided.

As described above, in the transflective liquid crystal display device 30, the direction of polarization of the polarizing plates 3a, 3b is set to provide the black level when no voltage is applied, and the horizontally aligned liquid crystal molecules of the liquid crystal layer 2c are risen into the vertical direction with respect to the substrate when a voltage is applied, whereby the white level is provided. At this time, optical compensation is performed by the seventh and eighth optical compensation plates 31, 32 as the optical compensation means for the liquid crystal layer 2c, whereby wider angle of visibility and higher contrast are realized and the number of components can be reduced. Therefore, in the transflective liquid crystal display device 30, wider angle of visibility and higher contrast for effecting display in the normally black mode by using the liquid crystal panel 2 with horizontally aligned liquid crystal molecules can be achieved and, in addition, it is not necessary to configure the liquid crystal panel 2 in a complicated structure. Consequently, the manufacturing cost can be reduced significantly.

### Fourth Embodiment

Subsequently, a reflective liquid crystal display device 40 shown in Fig. 4 will be described as a fourth embodiment of the present invention. In the following description, similar parts to the transflective liquid crystal display device 1 shown in Fig. 1 will not be described, and are represented by the same reference numerals.

The reflective liquid crystal display device 40 is provided with the liquid crystal panel 2 of a reflective type, and the liquid crystal panel 2 of the reflective type has an active matrix substrate 2b formed of a silicon substrate, and the pixel electrodes formed of metal material having high reflectance. The pixel electrodes have a light reflecting property for causing the incoming light from the side of the transparent substrate 2a on the front side to reflect therefrom. In the case where the active matrix substrate 2b is formed of a glass substrate, a structure in which a reflecting plate is arranged on the back surface of the active matrix substrate 2b may be employed. The reflective liquid crystal display device 40 includes a ninth optical compensation plate 41, a tenth optical compensation plate 42, and the quarter-wave plate 7a in sequence from the side of the liquid crystal panel 2 between the liquid crystal panel 2 and the polarizing plate 3a on the front side as the optical compensation means for performing optical compensation for the liquid crystal layer 2c of the liquid crystal panel 2 of the reflective type. In other words, the reflective liquid crystal display device 40 has a structure in which the polarizing plate 3a, the quarter-wave plate 7a, the tenth optical compensation plate 42, the ninth optical compensation plate 41, and the liquid crystal panel 2 are laminated in sequence from the front side and combined to each other.

Among these elements, the ninth optical compensation plate 41 is formed of the optically uniaxial phase difference film (A plate) for compensating mainly the phase difference in the direction toward the front, and the phase difference Δnd9 in a plane is set to be |Δnd9-Δndr| ≤ 20 [nm] (preferably, Δnd9=Δndr), and the azimuth angle thereof is set to be a+90°. The tenth optical compensation plate 42 is formed of the optically biaxial phase difference film (C plate) for compensating mainly the phase difference in the oblique direction, and the phase difference Δnd10 in a plane is set to be Δnd10| ≤ 20 [nm] (preferably, Δnd10=0), and the phase difference Rth in the direction of the thickness is set to be Rth<0. The quarter-wave plates 7a, 7b are composed of one or plurality of plates.

In the reflective liquid crystal display device 40 having the structure as described above, the incoming light from the front surface side is passed through the polarizing plate 3a and converted into a linearly polarized light, then is converted into a circularly polarized light by the quarter-wave plate 7a, then is converted into an elliptically polarized light through the ninth optical compensation plate 41 and the tenth optical compensation plate 42, and then enters into the liquid crystal panel 2. Then, the light entered into the liquid crystal panel 2 is converted into a circularly polarized light while passing through the liquid crystal layer 2c of the liquid crystal panel 2, and after having reflected on the reflecting portions of the pixel electrodes, is converted into an elliptically polarized light while passing through the liquid crystal layer 2c as the reflecting light, and goes out from the liquid crystal panel 2. Then, the outgoing light from the liquid crystal panel 2 is converted into a circularly polarized light while passing through the ninth, optical compensation plate 41 and the tenth optical compensation plate 42, then is converted into a linearly polarized light by the quarter-wave plate 7a, and then enters into the polarizing plate 3a.

Here, when no voltage is applied, the outgoing light from the tenth optical compensation plate 42 assumes a circularly polarized light in the opposite direction from the incoming direction. Therefore, the light which is finally converted into the linearly polarized light by the quarter-wave plate 7a is blocked by the polarizing plate 3a. Accordingly, black display which is referred to as a normally black mode is effected. On the other hand, when the voltage is applied, the outgoing light from the tenth optical compensation plate 42 is modulated while being passed through the liquid crystal layer 2c and assumes the circularly polarized light in the same direction as the incoming direction. Therefore, the light which is finally converted into the linearly polarized light by the quarter-wave plate 7a passes through the polarizing plate 3a. Accordingly, a white level is provided.

As described above, in the reflective liquid crystal display device 40, the direction of polarization of the polarizing plate 3a is set to provide the black level when no voltage is applied, and the horizontally aligned liquid crystal molecules of the liquid crystal layer 2c which are aligned in the horizontal direction are risen into the vertical direction with respect to the substrate when voltage is applied, whereby the white level is provided. At this time, optical compensation is performed by the ninth and tenth optical compensation plates 41, 42 as the optical compensation means for the liquid crystal layer 2c, whereby the wider angle of visibility and higher contrast are realized. Therefore, in the transflective liquid crystal display device 40, wider angle of visibility and higher contrast for effecting display in the normally black mode by using the liquid crystal panel 2 with horizontally aligned liquid crystal molecules can be achieved and, in addition, it is not necessary to configure the liquid crystal panel 2 in a complicated structure. Consequently, the manufacturing cost can be reduced significantly.

### Fifth Embodiment

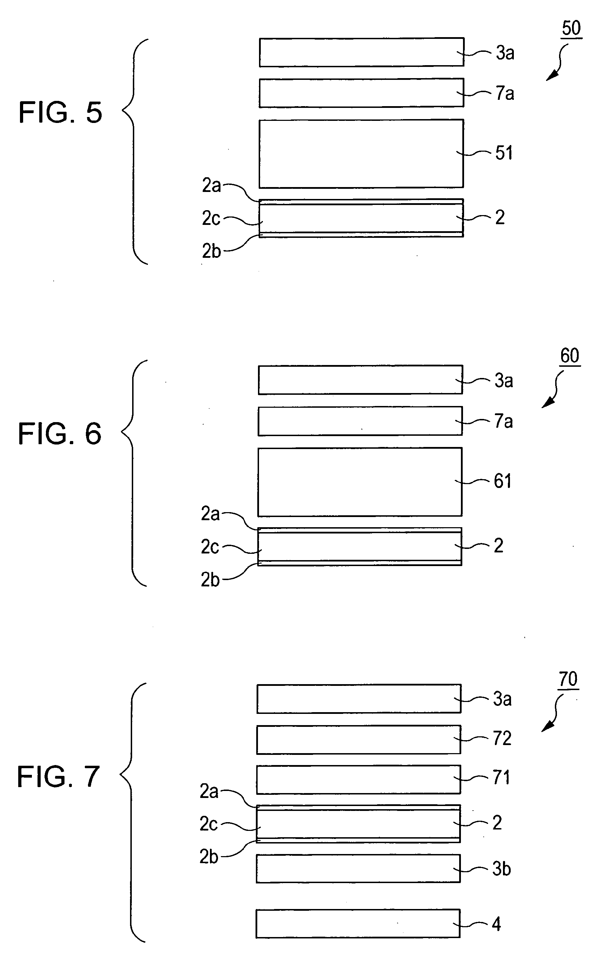

Subsequently, a reflective liquid crystal display device 50 shown in Fig. 5 will be described as a fifth embodiment of the present invention. In the following description, similar parts to the reflective liquid crystal display device 40 shown in Fig. 4 will not be described, and are represented by the same reference numerals.

The reflective liquid crystal display device 50 includes an eleventh optical compensation plate 51, and the quarter-wave plate 7a in sequence from the side of the liquid crystal panel 2 between the liquid crystal panel 2 and the polarizing plate 3a on the front side as the optical compensation means for performing optical compensation for the liquid crystal layer 2c of the liquid crystal panel 2 of the reflective type instead of the ninth and tenth optical compensating plates 41, 42 of the reflective liquid crystal display device 40. In other words, the reflective liquid crystal display device 50 has a structure in which the polarizing plate 3a, the quarter-wave plate 7a, the eleventh optical compensation plate 51, and the liquid crystal panel 2 are laminated in sequence from the front side and combined to each other.

Among these elements, the eleventh optical compensation plate 51 is formed of the optically biaxial phase difference film for compensating mainly the phase difference in the direction toward the front and in the oblique direction, and has functions of both of the ninth and tenth optical compensation plates 41, 42. In other words, as regards the eleventh optical compensation plate 51, the phase difference Δnd11 in a plane is set to be |Δnd11-Δndr| ≤ 20 [nm] (preferably, Δnd11=Δndr), the azimuth angle thereof is set to be a+90°, and the Nz coefficient is set to be Nz<1. The quarter-wave plates 7a, 7b are composed of one or plurality plates.

In the reflective liquid crystal display device 50 having the structure as described above, light incoming from the front surface side is passed through the polarizing plate 3a and converted into a linearly polarized light, then is converted into a circularly polarized light by the quarter-wave plate 7a, then is converted into an elliptically polarized light through the eleventh optical compensation plate 51, and then enters into the liquid crystal panel 2. Then, the light entered into the liquid crystal panel 2 is converted into a circularly polarized light while passing through the liquid crystal layer 2c of the liquid crystal panel 2, and after having reflected on the reflecting portions of the pixel electrodes, is converted into an elliptically polarized light while passing through the liquid crystal layer 2c as the reflecting light, and goes out from the liquid crystal panel 2. Then, the outgoing light from the liquid crystal panel 2 is converted into a circularly polarized light while passing through the eleventh optical compensation plate 51, then is converted into a linearly polarized light by the quarter-wave plate 7a, and then enters into the polarizing plate 3a.

Here, when no voltage is applied, the outgoing light from the eleventh optical compensation plate 51 assumes a circularly polarized light in the opposite direction from the incoming direction. Therefore, the light which is finally converted into the linearly polarized light by the quarter-wave plate 7a is blocked by the polarizing plate 3a. Accordingly, black display which is referred to as a normally black mode is effected. On the other hand, when the voltage is applied, the outgoing light from the eleventh optical compensation plate 51 is modulated while being passed through the liquid crystal layer 2c and assumes the circularly polarized light in the same direction as the incoming direction. Therefore, the light which is finally converted into the linearly polarized light by the quarter-wave plate 7a passes through the polarizing plate 3a. Accordingly, a white level is provided.

As described above, in the reflective liquid crystal display device 50, the direction of polarization of the polarizing plate 3a is set to provide the black level when no voltage is applied, and the horizontally aligned liquid crystal molecules of, the liquid crystal layer 2c are risen into the vertical direction with respect to the substrate when a voltage is applied, whereby the white level is provided. At this time, optical compensation is performed by the eleventh optical compensation plate 51 as the optical compensation means for the liquid crystal layer 2c, whereby the wider angle of visibility and higher contrast are realized, and the number of components can be reduced. Therefore, in the reflective liquid crystal display device 50, wider angle of visibility and higher contrast for effecting display in the normally black mode by using the liquid crystal panel 2 with horizontally aligned liquid crystal molecules can be achieved and, in addition, it is not necessary to configure the liquid crystal panel 2 in a complicated structure. Consequently, the manufacturing cost can be reduced significantly.

### Sixth Embodiment

Subsequently, a reflective liquid crystal display device 60 shown in Fig. 6 will be described as a sixth embodiment of the present invention. In the following description; similar parts to the reflective liquid crystal display device 40 shown in Fig. 4 will not be described, and are represented by the same reference numerals.

The reflective liquid crystal display device 60 includes a twelfth optical compensation plate 61, and the quarter-wave plate 7a in sequence from the side of the liquid crystal panel 2 between the liquid crystal panel 2 and the polarizing plate 3a on the front side as the optical compensation means for performing optical compensation for the liquid crystal layer 2c of the liquid crystal panel 2 of the reflective type instead of the ninth and tenth optical compensating plates 41, 42 of the reflective liquid crystal display device 40. In other words, the reflective liquid crystal display device 60 has a structure in which the polarizing plate 3a, the quarter-wave plate 7a, the twelfth optical compensation plate 61, and the liquid crystal panel 2 are laminated in sequence from the front side and combined to each other.

Among these elements, the twelfth optical compensation plate 61 is formed of the obliquely aligned phase difference film fabricated so that the optical axis thereof is inclined, and has a function to compensate the pretilt angle of the liquid crystal layer 2c in addition to the function of the eleventh optical compensation plate 51. In other words, as regards the twelfth optical compensation plate 61, the phase difference Δnd12 in a plane is set to be |Δnd12-Δndr| ≤ 20 [nm] (preferably, Δnd12=Δndr), the azimuth angle thereof is set to be a+90°, the Nz coefficient is set to be Nz<1, and the angle of inclination of the optical axis is set to substantially coincide with the pretilt angle of the liquid crystal layer 2c. The quarter-wave plates 7a, 7b are composed of one or plurality plates.

In the reflective liquid crystal display device 60 having the structure as described above, the incoming light from the front surface side is passed through the polarizing plate 3a and converted into a linearly polarized light, then is converted into a circularly polarized light by the quarter-wave plate 7a, then is converted into an elliptically polarized light through the twelfth optical compensation plate 61, and then enters into the liquid crystal panel 2. Then, the light entered into the liquid crystal panel 2 is converted into a circularly polarized light while passing through the liquid crystal layer 2c of the liquid crystal panel 2, and after having reflected on the reflecting portions of the pixel electrodes, is converted into an elliptically polarized light while passing through the liquid crystal layer 2c as the reflecting light, and goes out from the liquid crystal panel 2. Then, the outgoing light from the liquid crystal panel 2 is converted into a circularly polarized light while passing through the twelfth optical compensation plate 61, then is converted into a linearly polarized light by the quarter-wave plate 7a, and then enters into the polarizing plate 3a.

Here, when no voltage is applied, the outgoing light from the twelfth optical compensation plate 61 assumes a circularly polarized light in the opposite direction from the incoming direction. Therefore, the light which is finally converted into the linearly polarized light by the quarter-wave plate 7a is blocked by the polarizing plate 3a. Accordingly, black display which is referred to as a normally black mode is effected. On the other hand, when the voltage is applied, the outgoing light from the twelfth optical compensation plate 61 is modulated while being passed through the liquid crystal layer 2c and assumes the circularly polarized light in the same direction as the incoming direction. Therefore, the light which is finally converted into the linearly polarized light by the quarter-wave plate 7a passes through the polarizing plate 3a. Accordingly, white level is provided.

As described above, in the reflective liquid crystal display device 60, the direction of polarization of the polarizing plate 3a is set to provide the black level when no voltage is applied, and the horizontally aligned liquid crystal molecules of the liquid crystal layer 2c are risen into the vertical direction with respect to the substrate when a voltage is applied, whereby the white level is provided. At this time, optical compensation including the pretilt angle can be performed by the twelfth optical compensation plate 61 as the optical compensation means for the liquid crystal layer 2c, whereby the wider angle of visibility and higher contrast are realized, and the number of components can be reduced. Therefore, in the reflective liquid crystal display device 60, wider angle of visibility and higher contrast for effecting display in the normally black mode by using the liquid crystal panel 2 with horizontally aligned liquid crystal molecules can be achieved and, in addition, it is not necessary to configure the liquid crystal panel 2 in a complicated structure. Consequently, the manufacturing cost can be reduced significantly.

### Seventh Embodiment

Subsequently, a transmissive liquid crystal display device 70 shown in Fig. 7 will be described as a seventh embodiment of the present invention. In the following description, similar parts to the transflective liquid crystal display device 1 shown in Fig. 1 will not be described, and are represented by the same reference numerals.

The transmissive liquid crystal display device 70 includes the liquid crystal panel 2 of a transmissive type, and this liquid crystal panel 2 of the transmissive type includes the transparent substrate 2a and the active matrix substrate 2b formed of glass substrate, and the pixel electrodes formed of transparent conductive material such as ITO (Indium-Tin Oxide). The pixel electrodes have light permeability for allowing incoming light from the side of the active matrix substrate 2b on the back side to transmit therethrough.

The transmissive liquid crystal display device 70 includes a thirteenth optical compensation plate 71, and a fourteenth optical compensation plate 72 in sequence from the side of the liquid crystal panel 2 between the liquid crystal panel 2 and the polarizing plate on the front side as the optical compensation means for performing optical compensation for the liquid crystal layer 2c of the liquid crystal panel 2 of the transmissive type. In other words, the transmissive liquid crystal display device 70 has a structure in which the polarizing plate 3a, the thirteenth optical compensation plate 71, the fourteenth optical compensation plate 72, the liquid crystal panel 2, the polarizing plate 3b, and the back light 4 are laminated in sequence from the front side and combined to each other.

Among these elements, the thirteenth optical compensation plate 71 is formed of the optically uniaxial phase difference film (A plate) for compensating mainly the phase difference in the direction toward the front, and the phase difference Δnd13 in a plane is set to be |Δnd13-Δndr| ≤ 20 [nm] (preferably, Δnd13=Δndr), and the azimuth angle thereof is set to be a+90°. The fourteenth optical compensation plate 72 is formed of the optically biaxial phase difference film (C plate) for compensating mainly the phase difference in the oblique direction, the phase difference Δnd14 in a plane is set to be |Δnd14| ≤ 20 [nm] (preferably, Δnd14=0), and the phase difference Rth in the direction of the thickness is set to be Rth<0.

In the transmissive liquid crystal display device 70 having the structure as described above, light emitted from the back light 4 is passed through the polarizing plate 3b and converted into a linearly polarized light, then is converted into an elliptically polarized light through the thirteenth optical compensation plate 71 and the fourteenth optical compensation plate 72, and then enters into the liquid crystal panel 2. Then, the light entered into the liquid crystal panel 2 is transmitted through the transmitting portions of the pixel electrodes, then passing through the liquid crystal layer 2c of the liquid crystal panel 2 as the transmissive, and then goes out from the liquid crystal panel 2 Then, the outgoing light from the liquid crystal panel 2 is converted into a linearly polarized light while passing through the thirteenth optical compensation plate 71 and the fourteenth optical compensation plate 72, and then enters into the polarizing plate 3a.

Here, when no voltage is applied, the outgoing light assumes a linearly polarized light in the direction opposite from the incoming direction. Therefore, this linearly polarized light is blocked by the polarizing plate 3a. Accordingly, black display which is referred to as a normally black mode is effected. On the other hand, when the voltage is applied, the outgoing light from the liquid crystal panel 2 is modulated while passing through the liquid crystal layer 2c and converted into the linearly polarized light which is the same as the incoming light, the light assuming the linearly polarized light passes through the polarizing plate 3a. Accordingly, the white level is provided.

As described above, in the transmissive liquid crystal display device 70, the polarizing direction of the polarizing plates 3a, 3b are set so as to provide the black level when no voltage is applied, and the horizontally aligned liquid crystal molecules of the liquid crystal layer 2c are risen into the vertical direction with respect to the substrate when voltage is applied, whereby the white level is provided. At this time, optical compensation is performed by the thirteenth and fourteenth optical compensation plates 71, 72 as the optical compensation means for the liquid crystal layer 2c, whereby the wider angle of visibility and higher contrast are realized and the number of components can be reduced. Therefore, in the transmissive liquid crystal display device 70, wider angle of visibility and higher contrast for effecting display in the normally black mode by using the liquid crystal panel 2 with horizontally aligned liquid crystal molecules can be achieved and, in addition, it is not necessary to configure the liquid crystal panel 2 in a complicated structure. Consequently, the manufacturing cost can be reduced significantly.

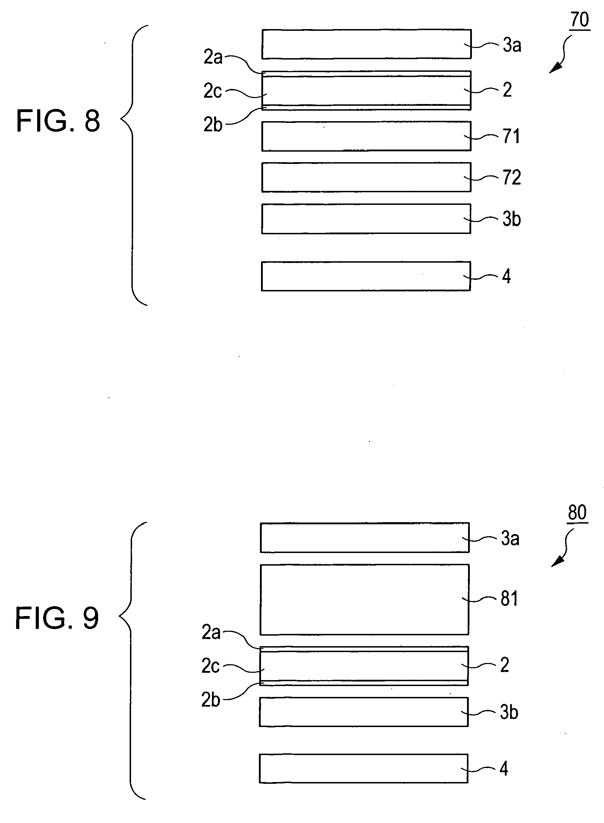

The transmissive liquid crystal display device 70 may employ a structure including the thirteenth optical compensation plate 71 and the fourteenth optical compensation plate 72 in sequence from the side of the liquid crystal panel 2 between the liquid crystal panel 2 and the polarizing plate 3b on the back surface side as shown in Fig. 8. In other words, the transmissive liquid crystal display device 70 may have a structure in which the polarizing plate 3a, the quarter-wave plate 7a, the liquid crystal panel 2, the thirteenth optical compensation plate 71, the fourteenth optical compensation plate 72, the polarizing plate 3b, and the back light 4 are laminated in sequence from the front side and combined to each other. In this case as well, as in the case of the transmissive liquid crystal display device 70 shown in Fig. 7, wider angle of visibility and higher contrast for effecting display in the normally black mode by using the liquid crystal panel 2 with horizontally aligned liquid crystal molecules can be achieved and, in addition, it is not necessary to configure the liquid crystal panel 2 in a complicated structure. Consequently, the manufacturing cost can be reduced significantly.

### Eighth Embodiment

Subsequently, a transmissive liquid crystal display device 80 shown in Fig. 9 will be described as an eighth embodiment of the present invention. In the following description, similar parts to the transmissive liquid crystal display device 70 shown in Fig. 7 will not be described, and are represented by the same reference numerals.

The transmissive liquid crystal display device 80 includes a fifteenth optical compensation plate 81 between the liquid crystal panel 2 and the polarizing plate 3a on the front side as the optical compensation means for performing optical compensation for the liquid crystal layer 2c of the liquid crystal panel 2 of the transmissive type instead of the thirteenth and fourteenth optical compensation plates 71, 72 of the transmissive liquid crystal display device 70. In other words, the transmissive liquid crystal display device 80 has a structure in which the polarizing plate 3a, the fifteenth optical compensation plate 81, the liquid crystal panel 2, the polarizing plate 3b, and the back light are laminated in sequence from the front side and combined to each other.

Among these elements, the fifteenth optical compensation plate 81 is formed of the optically biaxial phase difference film for compensating mainly the phase difference in the direction toward the front and in the oblique direction, and has functions of the thirteenth and fourteenth optical compensation plates 71, 72. In other words, as regards the fifteenth optical compensation plate 81, the phase difference Δnd15 in a plane is set to be |Δnd15-Δndr| ≤ 20 [nm] (preferably, Δnd15=Δndr), the azimuth angle thereof is set to be a+90°, and the Nz coefficient is set to be Nz<1.

In the transmissive liquid crystal display device 80 having the structure as described above, light emitted from the back light 4 is passed through the polarizing plate 3b and converted into a linearly polarized light, then is converted into an elliptically polarized light through the fifteenth optical compensation plate 81, and then enters into the liquid crystal panel 2. Then, the light entered into the liquid crystal panel 2 is transmitted through the transmitting portions of the pixel electrodes, is passed through the liquid crystal layer 2c of the liquid crystal panel 2 as the transmitting light and then goes out from the liquid crystal panel 2. Then, the outgoing light from the liquid crystal panel 2 is converted into a linearly polarized light while passing through the fifteenth optical compensation plate 81, and then enters into the polarizing plate 3a.

Here, when no voltage is applied, the outgoing light assumes a linearly polarized light in the direction opposite from the incoming direction. Therefore, this linearly polarized light is blocked by the polarizing plate 3a. Accordingly, black display which is referred to as a normally black mode is effected. On the other hand, when the voltage is applied, the outgoing light from the liquid crystal panel 2 is modulated while passing through the liquid crystal layer 2c and converted into the linearly polarized light which is the same as the incoming light, the light assuming the linearly polarized light passes through the polarizing plate 3a. Accordingly, the white level is provided.

As described above, in the transmissive liquid crystal display device 80, the polarizing direction of the polarizing plates 3a, 3b are set so as to provide the black level when no voltage is applied, and the horizontally aligned liquid crystal molecules of the liquid crystal layer 2c are risen into the vertical direction with respect to the substrate when a voltage is applied, whereby the white level is provided. At this time, optical compensation is performed by the fifteenth optical compensation plate 81 as the optical compensation means for the liquid crystal layer 2c, whereby the wider angle of visibility and higher contrast are realized and the number of components can be reduced. Therefore, in the transmissive liquid crystal display device 80, wider angle of visibility and higher contrast for effecting display in the normally black mode by using the liquid crystal panel 2 with horizontally aligned liquid crystal molecules can be achieved and, in addition, it is not necessary to configure the liquid crystal panel 2 in a complicated structure. Consequently, the manufacturing cost can be reduced significantly.

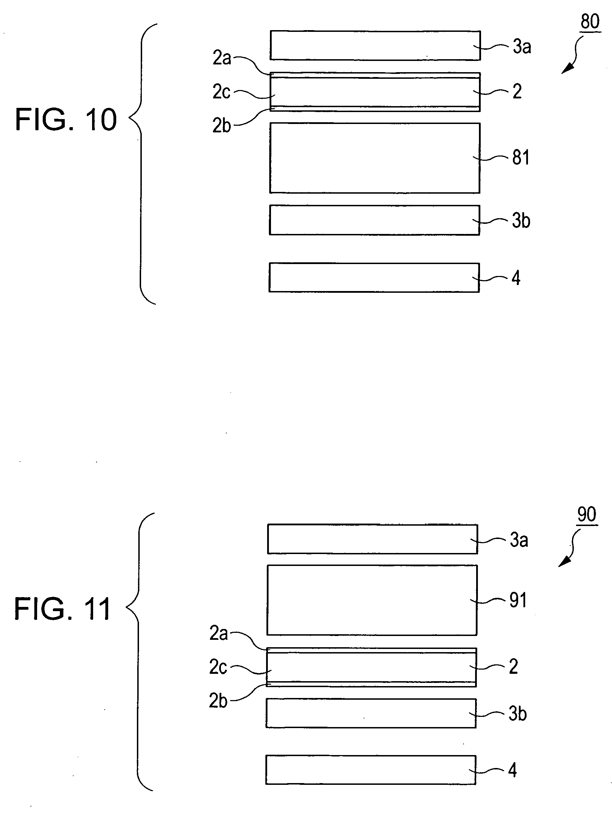

The transmissive liquid crystal display device 80 may employ a structure including the fifteenth optical compensation plate 81 between the liquid crystal panel 2 and the polarizing plate 3b on the back side as shown in Fig. 10. In other words, the transmissive liquid crystal display device 80 may have a structure in which the polarizing plate 3a, the liquid crystal panel 2, the fifteenth optical compensation plate 81, the polarizing plate 3b, and the back light 4 are laminated in sequence from the front side and combined to each other. In this case as well, as in the case of the transmissive liquid crystal display device 80 shown in Fig. 9, wider angle of visibility and higher contrast for effecting display in the normally black mode by using the liquid crystal panel 2 with horizontally aligned liquid crystal molecules can be achieved and, in addition, it is not necessary to configure the liquid crystal panel 2 in a complicated structure. Consequently, the manufacturing cost can be reduced significantly.

### Ninth Embodiment

Subsequently, a transmissive liquid crystal display device 90 shown in Fig. 11 will be described as a ninth embodiment of the present invention. In the following description, similar parts to the transmissive liquid crystal display device 70 shown in Fig. 7 will not be described, and are represented by the same reference numerals.

The transmissive liquid crystal display device 90 includes a sixteenth optical compensation plate 91 between the liquid crystal panel 2 and the polarizing plate 3a on the front side as the optical compensation means for performing optical compensation for the liquid crystal layer 2c of the liquid crystal panel 2 of the transmissive type instead of the thirteenth and fourteenth optical compensation plates 71, 72 of the transmissive liquid crystal display device 70. In other words, the transmissive liquid crystal display device 90 has a structure in which the polarizing plate 3a, the sixteenth optical compensation plate 91, the liquid crystal panel 2, the polarizing plate 3b, and the back light 4 are laminated in sequence from the front side and combined to each other.

Among these elements, the sixteenth optical compensation plate 91 is formed of the obliquely aligned phase difference film fabricated so that the optical axis thereof is inclined, and has a function to compensate the pretilt angle of the liquid crystal layer 2c in addition to a function of the fifteenth optical compensation plate 81. In other words, as regards the sixteenth optical compensation plate 91, the phase difference Δnd16 in a plane is set to be |Δnd16-Δndr| ≤ 20 [nm] (preferably, Δnd16=Δndr), the azimuth angle thereof is set to be a+90°, the Nz coefficient is set to be Nz<1, and the angle of inclination of the optical axis is set to substantially coincide with the pretilt angle of the liquid crystal layer 2c. The quarter-wave plates 7a, 7b are composed of one or plurality of plates.

In the transmissive liquid crystal display device 90 having the structure as described above, light emitted from the back light 4 is passed through the polarizing plate 3b and converted into a linearly polarized light, then is converted into an elliptically polarized light through the sixteenth optical compensation plate 91, and then enters into the liquid crystal panel 2. Then, the light entered into the liquid crystal panel 2 is transmitted through the transmitting portions of the pixel electrodes, is passed through the liquid crystal layer 2c of the liquid crystal panel 2 as the transmitting light and then goes out from the liquid crystal panel 2. Then, the outgoing light from the liquid crystal panel 2 is converted into a linearly polarized light while passing through the sixteenth optical compensation plate 91, and then enters into the polarizing plate 3a.

Here, when no voltage is applied, the outgoing light assumes a linearly polarized light in the direction opposite from the incoming direction. Therefore, this linearly polarized light is blocked by the polarizing plate 3a. Accordingly, black display which is referred to as a normally black mode is effected. On the other hand, when the voltage is applied, the outgoing light from the liquid crystal panel 2 is modulated while passing through the liquid crystal layer 2c and converted into the linearly polarized light which is the same as the incoming light, the light assuming the linearly polarized light passes through the polarizing plate 3a. Accordingly, the white level is provided.

As described above, in the transmissive liquid crystal display device 90, the polarizing direction of the polarizing plates 3a, 3b are set so as to provide the black level when no voltage is applied, and the horizontally aligned liquid crystal molecules of the liquid crystal layer 2c are risen into the vertical direction with respect to the substrate when voltage is applied, whereby the white level is provided. At this time, optical compensation including the pretilt angle is performed by the sixteenth optical compensation: plate 91 as the optical compensation means for the liquid crystal layer 2c, whereby further wider angle of visibility and higher contrast are realized and the number of components can be reduced. Therefore, in the transmissive liquid crystal display device 90, wider angle of visibility and higher contrast for effecting display in the normally black mode by using the liquid crystal panel 2 with horizontally aligned liquid crystal molecules can be achieved and, in addition, it is not necessary to configure the liquid crystal panel 2 in a complicated structure. Consequently, the manufacturing cost can be reduced significantly.

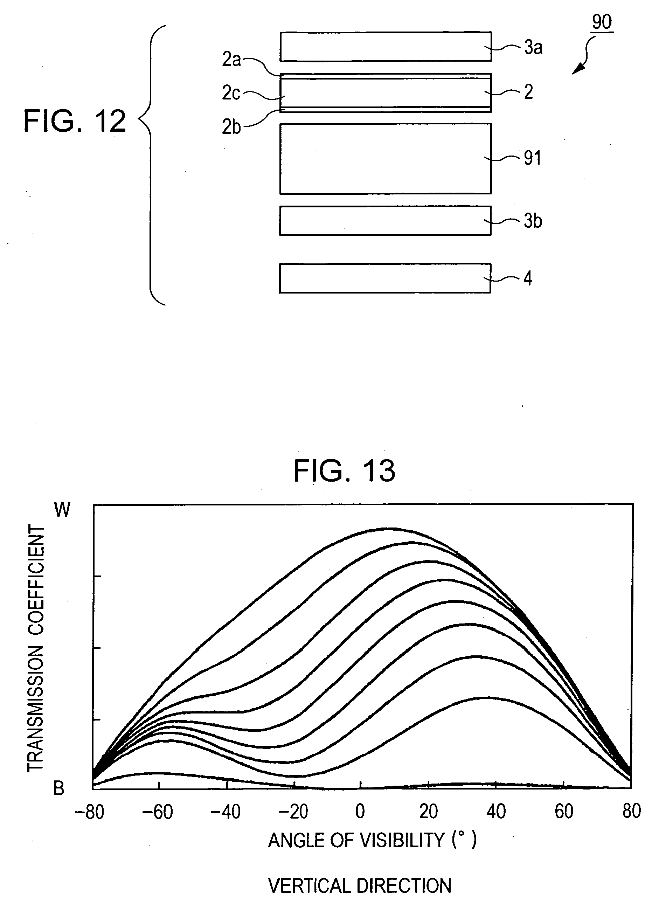

The transmissive liquid crystal display device 90 may employ a structure including the sixteenth optical compensation plate 91 between the liquid crystal panel 2 and the polarizing plate 3b on the back side as shown in Fig. 12. In other words, the transmissive liquid crystal display device 90 may have a structure in which the polarizing plate 3a, the liquid crystal panel 2, the sixteenth optical compensation plate 91, the polarizing plate 3b, and the back light 4 are laminated in sequence from the front side and combined to each other. In this case as well, as in the case of the transmissive liquid crystal display device 90 shown in Fig. 11, wider angle of visibility and higher contrast for effecting display in the normally black mode by using the liquid crystal panel 2 with horizontally aligned liquid crystal molecules can be achieved and, in addition, it is not necessary to configure the liquid crystal panel 2 in a complicated structure. Consequently, the manufacturing cost can be reduced significantly.

### Examples

An example is shown below for making advantages of the present invention further understandable. However, the following example is not intended to limit the technical scope of the present invention.

### Example 1

In the example 1, a transflective liquid crystal display device having the same structure as the transflective liquid crystal display device according to the first embodiment, that is, the transflective liquid crystal display device having a structure in which the polarizing plate, the quarter-wave plate, the second optical compensation plate, the first optical compensation plate, the liquid crystal panel, the third optical compensation plate, the fourth optical compensation plate, the quarter-wave plate, the polarizing plate, and the back light are laminated in sequence from the front side and combined to each other was fabricated.

Among above-described elements, a homogeneous liquid crystal in which the liquid crystal molecules were aligned in the horizontal direction so that the twist angle becomes about 0° by giving a pretilt in a predetermined direction by rubbing the alignment film (AP-5514xx manufactured by Chisso Petrochemical Corp.) was used. The phase difference Δndr at the reflecting portions of the liquid crystal layer is 300 nm, the phase difference Δndt at the transmitting portions of the liquid crystal layer is 150 nm, and the azimuth angle at which the liquid crystal molecules of the liquid crystal layer are aligned is 90°. An A-plate of a norbornene system was used as the first optical compensation plate, and the phase difference in a plate Δnd1 is 150 nm, and the azimuth angle is 0°. A C-plate of the norbornene system is used as the second optical compensation plate, the phase difference in a plate Δnd2 is 0 nm, and the phase difference Rth in the direction of the thickness is -160 nm. The A-plate of the norbornene system is used as the third optical compensation plate, the phase difference in a plane Δnd3 is 150 nm, and the azimuth angle is 0°. The C-plate of the norbornene system is used for the fourth optical compensation plate, the phase difference in a plane Δnd4 is 0 nm, and the phase difference Rth in the direction of the thickness is -160 nm.

### Comparative Example 1

In the Comparative Example 1, a transflective liquid crystal display device using a TN liquid crystal of a normally white mode in the related art was manufactured.

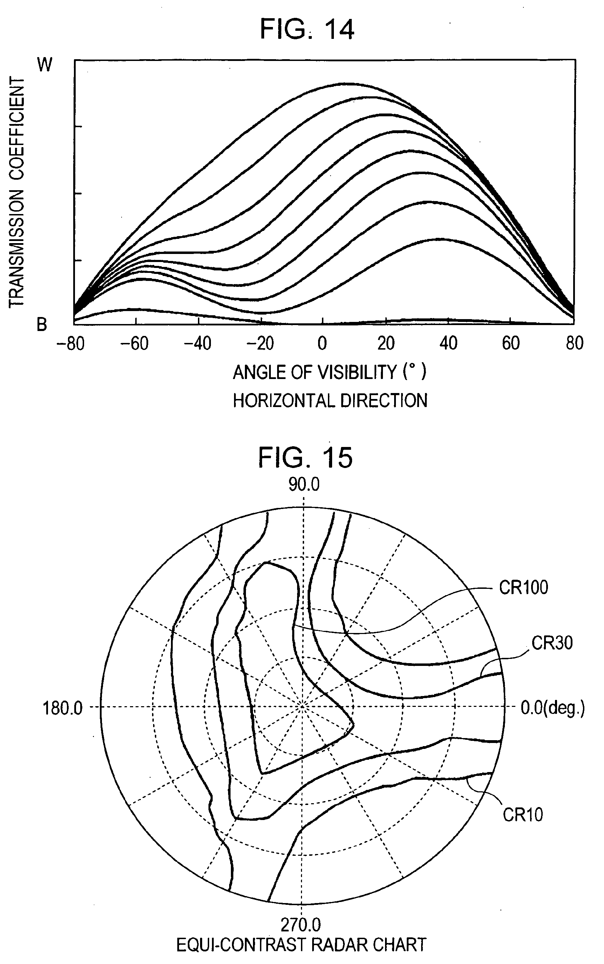

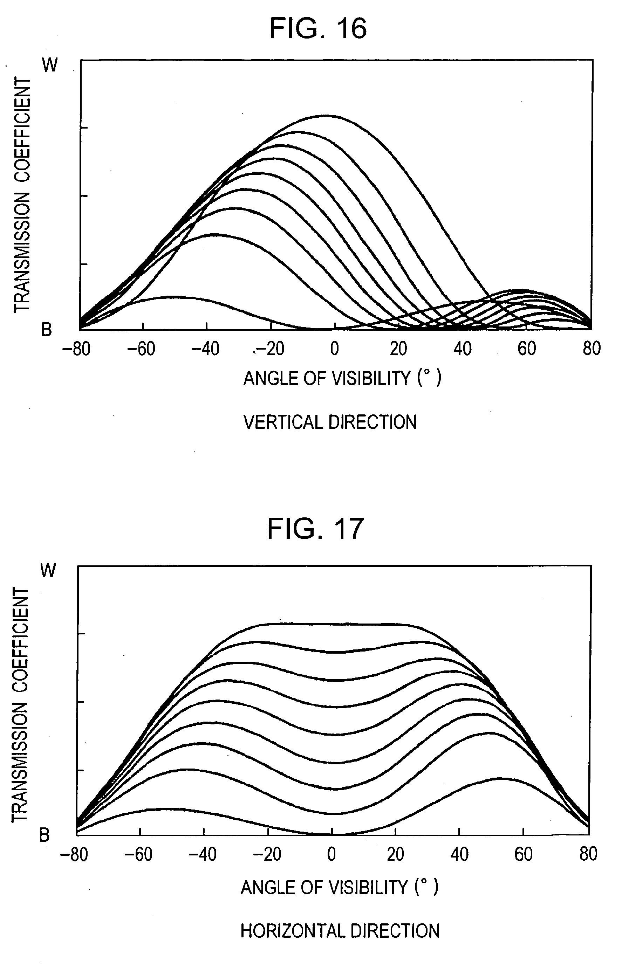

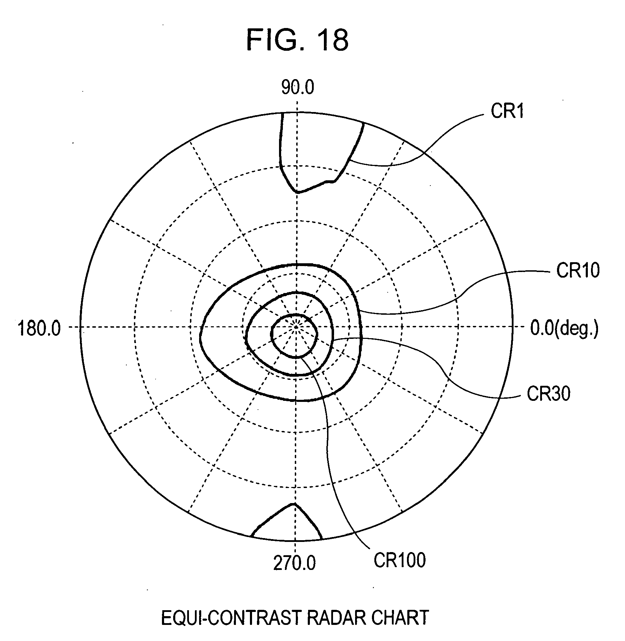

Results of measurement of angle-of-visibility characteristics of the transflective liquid crystal display devices in Example 1 and Comparative Example 1 are shown in Fig. 13 to Fig. 18. Fig. 13 and Fig. 16 are graphs showing angle-of-visibility characteristics in the vertical direction of the panel, Fig. 14 and Fig. 17 are graphs showing angle-of-visibility characteristics in the horizontal direction of the panel, and Fig. 15 and Fig. 18 are equi-contrast radar charts showing the angle-of-visibility characteristics over the entire panel.

As shown in Fig. 13 and Fig. 14, in the transflective liquid crystal display device in Example 1, it should be noted that inversion of the transmission factor due to the difference of the angle of visibility did not occur and a preferable angle-of-visibility characteristics are shown both in the vertical direction and in the horizontal direction in comparison with the transflective liquid crystal display device in Comparative Example 1 shown in Fig. 16 and Fig. 17. Also, as shown in Fig. 15, it should be noted that the transflective liquid crystal display device in Example 1, shown in Fig. 18, is higher in contrast over the entire area of the angle of visibility in comparison with the transflective liquid crystal display device in Comparative Example 1. As described above, according to the present invention, a liquid crystal display device of a normally black mode in which the wider angle of visibility and the higher contrast are realized and, in addition, the manufacturing cost can be reduced may be provided.

## Claims

1. A liquid crystal display device comprising:
a liquid crystal panel including a pair of substrates being disposed so as to oppose to each other and each having an electrode and an alignment film formed respectively on the opposing surfaces thereof, and liquid crystal layer in which nematic liquid crystal encapsulated between the pair of substrates is aligned in the horizontal direction to be at substantially 0° in twist angle by giving a pretilt in a predetermined direction by the alignment film;
a polarizing plate being arranged at least on the front side of the liquid crystal panel and being set in direction of polarization to provide a black level when a drive voltage to be applied between the electrodes is brought into an OFF state, and
optical compensating means disposed at least on the side of one of the surfaces of the liquid crystal panel for performing optical compensation for the liquid crystal layer.

2. The liquid crystal display device according to Claim 1, wherein the nematic liquid crystal has a positive dielectric anisotropy.

3. The liquid crystal display device according to Claim 1 or 2, wherein the liquid crystal panel is of a transflective or a transmissive type, and the polarizing plate is arranged on the front surface side or a back surface side, and
wherein a back light is arranged on the side of the polarizing plate on the back surface side opposite from the liquid crystal panel.

4. The liquid crystal display device according to Claim 1 or 2, wherein the liquid crystal panel is of a reflective type.

5. The liquid crystal display device according to Claim 3, wherein the liquid crystal panel is of the transflective type, and a pixel includes a reflecting portion for reflecting the incoming light from the substrate side on the front surface and a transmitting portion for transmitting the incoming light from the substrate side on the back surface,
wherein the optical compensating means comprises a first optical compensating plate, a second optical compensating plate, and a quarter-wave plate in sequence from the liquid crystal panel side between the liquid crystal panel and the polarizing plate on the front side, and a third optical compensating plate, a fourth optical compensating plate, and a quarter-wave plate in sequence from the liquid crystal panel side between the liquid crystal panel and the polarizing plate on the back surface side, and
wherein the phase difference in a plane of the first optical compensating plate Δnd1 satisfies |Δnd1-Δndr|≤20 [nm], the azimuth angle of the first optical compensating plate is a+90°, the phase difference in a plane of the second optical compensating plate Δnd2 satisfies |Δnd2|≤20 [nm], the phase difference Rth of the second optical compensating plate in the direction of the thickness satisfies Rth<0, the phase difference in a plane of the third optical compensating plate Δnd3 satisfies |Δnd3-(Δndt-Δndr) | ≤20 [nm], the azimuth angle of the third optical compensating plate is a+90°, the phase difference in a plane of the fourth optical compensating plate Δnd4 satisfies |Δnd4|≤20 [nm], the phase difference Rth of the fourth optical compensating plate in the direction of the thickness satisfies Rth<0, and one or a plurality of the quarter-wave plates are provided, where Δndr represents a phase difference at the reflecting portion of the liquid crystal layer, Δndt represents a phase difference at the transmitting portion of the liquid crystal layer, and a° represents an alignment of the liquid crystal molecules of the liquid crystal layer (Rth={ (nx+ny)/2-nz}d, where nx represents a refractive index of the optical compensating plate in the direction of the phase lag axis, ny represents a refractive index of the optical compensating plate in the direction of the phase advance axis, nz represents a refractive index of the optical compensating plate in the direction of the thickness, and d represents the thickness of the optical compensating plate).

6. The liquid crystal display device according to any of Claims 3 to 5, wherein the liquid crystal panel is of the transflective type and the pixel includes the reflecting portion for reflecting the incoming light from the substrate side on the front surface and the transmitting portion for transmitting the incoming light from the substrate side on the back surface,
wherein the optical compensating means includes a fifth optical compensating plate and the quarter-wave plate in sequence from the liquid crystal panel side between the liquid crystal panel and the polarizing plate on the front side, and a sixth optical compensating plate and the quarter-wave plate in sequence from the liquid crystal panel side between the liquid crystal panel and the polarizing plate on the back surface side, and
wherein the phase difference in a plane of the fifth optical compensating plate Δnd5 satisfies |Δnd5-Δndr|≤20 [nm], the azimuth angle of the fifth optical compensating plate is a+90°, the Nz coefficient of the fifth optical compensating plate is Nz<1, the phase difference Δnd6 in a plane of the sixth optical compensating plate satisfies |Δ nd6-(Δndt-Δndr)| ≤20 [nm], the azimuth angle of the sixth optical compensating plate is a+90°, the Nz coefficient of the sixth optical compensating plate is Nz<1, and one or a plurality of the quarter-wave plates are provided, where Δ ndr represents a phase difference at the reflecting portion of the liquid crystal layer, Δndt represents a phase difference at the transmitting portion of the liquid crystal layer, and a° represents an alignment of the liquid crystal molecules of the liquid crystal layer (Nz=(nx-nz)/(nx-ny), where nx represents a refractive index of the optical compensating plate in the direction of the phase lag axis, ny represents a refractive index of the optical compensating plate in the direction of the phase advance axis, nz represents a refractive index of the optical compensating plate in the direction of the thickness, and d represents the thickness of the optical compensating plate).

7. The liquid crystal display device according to any of Claims 1 to 6, wherein the liquid crystal panel is of the transflective type and the pixel includes a reflecting portion for reflecting the incoming light from the substrate side on the front surface and the transmitting portion for transmitting the incoming light from the substrate side on the back surface, the optical compensating means includes a seventh optical compensating plate and the quarter-wave plate in sequence from the liquid crystal panel side between the liquid crystal panel and the polarizing plate on the front side, and an eighth optical compensating plate and the quarter-wave plate in sequence from the liquid crystal panel side between the liquid crystal panel and the polarizing plate on the back surface side,
wherein the seventh optical compensating plate is fabricated so that an optical axis thereof is inclined, and the phase difference Δnd7 in a plane of the seventh optical compensating plate satisfies |Δnd7-Δndr|≤20 [nm], the azimuth angle of the seventh optical compensating plate is a+90°, the Nz coefficient of the seventh optical compensating plate satisfies Nz<1, the angle of inclination of the optical axis of the seventh optical compensating plate substantially coincides with the pretilt angle of the liquid crystal layer, the eighth optical compensating plate is fabricated so that the optical axis thereof is inclined, and the phase difference Δnd8 in a plane of the eighth optical compensating plate satisfies |Δnd8-(Δndt-Δndr)|≤ 20 [nm], the azimuth angle of the eighth optical compensating plate is a+90°, the Nz coefficient of the eighth optical compensating plate satisfies Nz<1, the angle of inclination of the optical axis of the eight optical compensating plate substantially coincides with the pretilt angle of the liquid crystal layer, and one or a plurality of the quarter-wave plates are provided, where Δndr represents a phase difference at the reflecting portion of the liquid crystal layer, Δndt represents a phase difference at the transmitting portion of the liquid crystal layer, and a° represents the alignment of the liquid crystal molecules of the liquid crystal layer, (Nz=(nx-nz)/(nx-ny), where nx represents a refractive index of the optical compensating plate in the direction of a phase lag axis, ny represents a refractive index of the optical compensating plate in the direction of the phase advance axis, nz represents a refractive index of the optical compensating plate in the direction of the thickness, and d represents the thickness of the optical compensating plate).

8. The liquid crystal display device according to any of Claims 1, 2 and 4, wherein the liquid crystal panel is of the reflective type and the optical compensating means comprises a ninth optical compensating plate, a tenth optical compensating plate, and the quarter-wave plate in sequence from the liquid crystal panel side between the liquid crystal panel and the polarizing plate on the front side, and
wherein the phase difference Δnd9 in a plane of the ninth optical compensating plate satisfies |Δnd9-Δndr|≤20 [nm], the azimuth angle of the ninth optical compensating plate is a+90°, the phase difference Δnd10 in a plane of the tenth optical compensating plate satisfies |Δnd10|≤0 [nm], the phase difference Rth of the tenth optical compensating plate in the direction of the thickness is Rth<0, and one or a plurality of the quarter wave plates are provided, where Δ ndr represents a phase difference of the liquid crystal layer, and a° represents the alignment of the liquid crystal molecules of the liquid crystal layer, (Rth={(nx+ny) /2-nz} d, where nx represents a refractive index of the optical compensating plate in the direction of the phase lag axis, ny represents a refractive index of the optical compensating plate in the direction of the phase advance axis, nz represents a refractive index of the optical compensating plate in the direction of the thickness, and d represents the thickness of the optical compensating plate).

9. The liquid crystal display device according to any of Claims 1, 2 and 8, wherein the liquid crystal panel is of a reflective type, and the optical compensating means includes an eleventh optical compensating plate and the quarter-wave plate in sequence from the liquid crystal panel side between the liquid crystal panel and the polarizing plate on the front side, and
wherein the phase difference Δnd11 in a plane of the eleventh optical compensating plate satisfies |Δnd 11-Δndr| ≤ 20[nm], the azimuth angle of the eleventh optical compensating plate is a+90°, the Nz coefficient of the optical compensating plate Nz is Nz<1, and one or a plurality of the quarter-wave plates are provided, where Δndr represents a phase difference of the liquid crystal layer, and a° represents the alignment of the liquid crystal molecules of the liquid crystal layer, (Nz=(nx-nz)/(nx-ny), where nx represents a refractive index of the optical compensating plate in the direction of the phase lag axis, ny represents a refractive index of the optical compensating plate in the direction of the phase advance axis, nz represents a refractive index of the optical compensating plate in the direction of the thickness, and d represents the thickness of the optical compensating plate).

10. The liquid crystal display device according to any of Claims 1, 2, 4, 8 and 9, wherein the liquid crystal panel is of the reflective type, the compensating means includes a twelfth optic compensating plate and the quarter-wave plate in sequence from the liquid crystal panel side between the liquid crystal panel and the polarizing plate on the front side, and the twelfth optical compensating plate is fabricated so that the optical axis thereof is inclined, the phase difference Δnd12 in a plane of the twelfth optical compensating plate satisfies |Δnd12-Δndr|≤20 [nm], the azimuth angle of the twelfth optical compensating plate is a+90°, the Nz coefficient of the twelfth optical compensating plate satisfies Nz<1, the angle of inclination of the optical axis of the twelfth optical compensating plate substantially coincides with the pretilt angle of the liquid crystal layer, and one or a plurality of the quarter-wave plates are provided, where Δndr represents a phase difference the liquid crystal layer, and a° represents the alignment of the liquid crystal molecules of the liquid crystal layer (Nz=(nx-nz)/(nx-ny), where nx represents a refractive index of the optical compensating plate in the direction of the phase lag axis, ny represents a refractive index of the optical compensating plate in the direction of the phase advance axis, nz represents a refractive index of the optical compensating plate in the direction of the thickness, and d represents the thickness of the optical compensating plate).

11. The liquid crystal display device according to Claim 3, wherein the liquid crystal panel is of the transmissive type, and the optical compensating means includes a thirteenth optical compensating plate and a fourteenth optical compensating plate in sequence from the liquid crystal panel side between the liquid crystal and the polarizing plate on the front side or on the back surface side, and
wherein the phase difference Δnd13 in a plane of the thirteenth optical compensating plate satisfies |Δnd13-Δndt|≤ 20 [nm], the azimuth angle of the thirteenth optical compensating plate is a+90°, the phase difference Δnd14 in a plane of the fourteenth optical compensating plate satisfies |Δnd14|≦20 [nm], the phase difference Rth of the fourteenth optical compensating plate in the direction of the thickness satisfies Rth<0 where Δndt represents a phase difference of the liquid crystal layer, and a° represents the alignment of the liquid crystal molecules of the liquid crystal layer, (Rth={(nx+ny)/2-nz}d, where nx represents a refractive index of the optical compensating plate in the direction of the phase lag axis, ny represents a refractive index of the optical compensating plate in the direction of the phase advance axis, nz represents a refractive index of the optical compensating plate in the direction of the thickness, and d represents the thickness of the optical compensating plate).

12. The liquid crystal display device according to Claim 3 or 11, wherein the liquid crystal panel is of the transmissive type, and the optical compensating means includes a fifteenth optical compensating plate between the liquid crystal panel and the polarizing plate on the front side or the back surface side, and
wherein the phase difference Δnd15 in a plane of the fifteenth optical compensating plate satisfies |Δnd15-Δndt|≤ 20 [nm], the azimuth angle of the fifteenth optical compensating plate is a+90°, and the Nz coefficient of the fifteenth optical compensating plate satisfies Nz<1, where Δ ndt represents a phase difference of the liquid crystal layer, and a° represents the alignment of the liquid crystal molecules of the liquid crystal layer (Nz=(nx-nz)/(nx-ny), where nx represents a refractive index of the optical compensating plate in the direction of a phase lag axis, ny represents a refractive index of the optical compensating plate in the direction of the phase advance axis, nz represents a refractive index of the optical compensating plate in the direction of the thickness, and d represents the thickness of the optical compensating plate).

13. The liquid crystal display device according to Claim 3, 11 and 12, wherein the liquid crystal panel is of the transmissive type, and the optical compensating means includes a sixteenth optical compensating plate between the liquid crystal panel and the polarizing plate on the front side or back surface side, and
the sixteenth optical compensating plate is fabricated so that the optical axis thereof is inclined,
wherein the phase difference Δnd16 in a plane of the sixteenth optical compensating plate satisfies |Δnd16-Δndt|≤ 20 [nm], the azimuth angle of the sixteenth optical compensating plate is a+90°, the Nz coefficient of the sixteenth optical compensating plate satisfies Nz<1, the inclination angle of the optical axis of the sixteenth optical compensating plate substantially coincides with the pretilt angle of the liquid crystal layer, where Δndt represents a phase difference of the liquid crystal layer, and a^{o} represents the alignment,of the liquid crystal molecules of the liquid crystal layer (Nz= (nx-nz) / (nx-ny), where nx represents a refractive index of the optical compensating plate in the direction of the phase lag axis, ny represents a refractive index of the optical compensating plate in the direction of the phase advance axis, nz represents a refractive index of the optical compensating plate in the direction of the thickness, and d represents the thickness of the optical compensating plate).
